# EUROPÄISCHE PATENTSCHRIFT

(11) **EP 0 643 229 B1**
(45) Veröffentlichungstag und Bekanntmachung des Hinweises auf die Patenterteilung: **15.04.1998**
(21) Anmeldenummer: 94111949.7
(22) Anmeldetag: 29.07.1994
(51) Int. Cl.: F16B 13/06

(54) **Spreizdübel mit Knickfunktion und Schraube**
Expansion dowel having a buckling function and screw
Cheville expansible ayant une fonction de flambage et vis

(30) Priorität: 13.08.1993 DE 4327202
(43) Veröffentlichungstag der Anmeldung: 15.03.1995
(73) Patentinhaber: Tox-Dübel-Werk R.W. Heckhausen GmbH & Co. KG, D-78346 Bodman-Ludwigshafen (DE)
(72) Erfinder: Leible, Dieter, D 78234 Engen (DE)
(74) Vertreter: Koch, Günther, Dipl.-Ing.

(56) Entgegenhaltungen:
- EP-A- 0 037 091
- EP-A- 0 518 010
- DE-A- 2 257 002
- DE-A- 3 544 283
- DE-A- 3 610 655
- DE-U- 8 522 711
- US-A- 3 888 156
- US-A- 4 986 710

## Beschreibung

Die Erfindung bezieht sich auf eine Dübeleinheit bestehend aus einem Spreizdübel und einer Schraube, die in ein Gewinde im Dübelfuß eindrehbar ist, und durch axiale Verspannung ein radiales Ausknicken und Aufspreizen bewirkt. Derartige aus Kunststoff hergestellte Spreiz- und Knickdübel mit in den Gewindefuß eindrehbarer Schraube sind in den verschiedensten Ausführungen bekannt geworden. Sie lassen sich in den verschiedensten Mauerwerk-Werkstoffen verarbeiten. In massiven Wänden, zum Beispiel Betonwänden, werden die Spreizsegmente bei axialer Verspannung gegen die Bohrlochwandung aufgespreizt und dadurch im Bohrloch festgelegt. In Hohlblocksteinen knicken die Spreizsegmente in einen an das Bohrloch anschließenden Hohlraum aus und verknoten sich, wodurch ein Zurückziehen durch das Bohrloch verhindert wird. Hierdurch ergeben sich bei geeigneter Anpassung von Dübel und Schraube hohe Ausziehwerte. Je nach Wahl des Kunststoffes ist es jedoch nicht immer auszuschließen, daß sich diese Ausziehwerte im Laufe der Zeit verringern, weil der Dübelwerkstoff durch Veränderung im Gefüge insbesondere durch Fließen, unter der Kraft des Anpreßdruckes deformiert und die Haltefunktion geschwächt wird.

Zur Vermeidung der Verringerung der Auszugswerte durch Alterung des Dübelwerkstoffs sind Metalldübel bekannt geworden, die dauerhaft die erreichte Auszugskraft gewährleisten. So sind zum Beispiel aus Messing bestehende Spreizdübel bekannt, die ein metrisches Innengewinde und Längsschlitze aufweisen, zwischen denen die Spreizsegmente gebildet sind, die sich beim Eindrehen der Schraube aufspreizen. Ferner sind metallische Dübel bekannt, bei denen über eine eingedrehte Schraube Spannkonen axial gegeneinander verspannt werden, die auf eine übergeschobene, an den inneren Enden konisch ausgebildete Hülse eine Spreizfunktion bewirken. Es sind ferner aus aufgerolltem Blech bestehende Dübel bekannt, bei denen durch axiale Verspannung die durch Längsschlitze gebildeten Blechsegmente des Dübelmantels ausknicken und so eine Haltefunktion bewirken.

Ein derartiger Blechdübel ist aus der DE-U-8522711 bekannt. Bei derartigen aufgerollten Blechdübeln besteht das Problem im Dübelfuß ein Gewinde vorzusehen, welches beim Verspannen der Schraube sich nicht aufweitet. Insbesondere wenn der Dübelfuß in einen Hohlraum einsteht, besteht die Gefahr, daß der aufgerollte Dübelfuß sich erweitert und die Schraube durchrutscht. Um dies zu vermeiden ist es bekannt, den Dübelkopf durch eine Blechhülse im Gewindebereich zu verstärken. Gemäß der DE-U-8522711 erfolgt die Verstärkung des Gewindes dadurch daß ein über den Gewindeabschnitt vorstehender Kragen auf den Gewindeabschnitt innen oder außen zurückgebogen wird, um so die Widerstandsfähigkeit in radialer Richtung zu erhöhen.

Der Erfindung liegt die Aufgabe zugrunde, einen optimierte Dübeleinheit mit einem metallischen Dübel zu schaffen, der eine zeitlich unveränderbare Ausziehfestigkeit besitzt und im Dübelfußbereich ein Gewinde aufweist, daß einer hohen axialen Zugbeanspruchung standhält.

Gemäß der Erfindung wird diese Aufgabe gelöst durch die Gesamtheit der im Patentanspruch 1 angegebenen Merkmale.

Der Erfindung liegt die Erkenntnis zugrunde, daß es entgegen den bisherigen Erkenntnissen der Fachwelt möglich ist, einen metallischen Dübel durch Kalt- oder Warmpressen herzustellen, der eine ähnliche Formgestalt hat, wie die bekannten aus Kunststoff hergestellten Dübel. Es hat sich gezeigt, daß derartige metallische Dübel die vorzugsweise aus Stahl oder einer Leichtmetall-Legierung hergestellt sind, in jedem Mauerwerk eingesetzt werden können und hierbei ihre Haltefunktion dauerhaft beibehalten.

Zweckmäßige Ausgestaltungen der Erfindung ergeben sich aus den Unteransprüchen.

Nachstehend werden zwei Ausführungsbeispiele der Erfindung anhand der Zeichnung beschrieben; in der Zeichnung zeigen:
- Fig. 1: ist ein Axialschnitt eines erfindungsgemäß ausgebildeten, aus Metall gefertigten Dübels,
- Fig. 2: ist ein Schnitt nach der Linie II-II gemäß Fig. 1,
- Fig. 3: zeigt den Einsatz eines erfindungsgemäßen Dübels in einer aus Hohlblocksteinen bestehenden Wand,
- Fig. 4: zeigt ein Einsatz des erfindungsgemäßen Dübels in einer aus Ziegel oder dergleichen massivem Mauerwerk bestehenden Wand.
- Fig. 5: ist eine Ansicht einer weiteren Ausführungsform eines erfindungsgemäß ausgebildeten Dübels,
- Fig. 6: zeigt einen Schnitt nach der Linie VI - VI gemäß Fig. 5.

Der Dübel ist einstückig aus Metall vorzugsweise in Kaltpreßtechnik hergestellt. Er kann jedoch auch durch Warmpressen hergestellt werden. Eine Herstellung im Metallspritzverfahren bleibt vorbehalten. Der Metalldübel besteht aus einem Dübelkopf 10, aus einem Dübelkörper 12 und aus einem Dübelfuß 14. Der Dübelkopf weist eine geschlossene zylindrische Hülse mit konstantem Innen- und Außendurchmesser auf. Der Dübelkörper 12 ist durch drei Längsschlitze 16 in drei Dübelsegmente 18 unterteilt, die einen konstanten Außendurchmesser aufweisen, jedoch einen Innendurchmesser besitzen, der von den beiden Enden des Dübelkörpers nach dem Mittelabschnitt 20 ansteigt, so daß sich die Dicke der Dübelsegmente nach der Mitte verringert und im Mittelabschnitt ein Knickgelenk 20 gebildet wird.

Der Dübelfuß 14 besteht aus einem massiven Hülsenring mit einem metrischen Innengewinde 22, dessen Durchmesser kleiner ist, als der Innendurchmesser in den Abschnitten 12 und 10. Im Vorderabschnitt weist der Dübelfuß 14 eine konische Verjüngung 24 auf.

Im Übergangsbereich zwischen Dübelfuß 14 und Dübelkörper 12 ist außen eine Schwächungsnut 26 angebracht. Durch diese Materialschwächung wird ein Gelenk geschaffen, um das die Dübelsegmente bei axialer Verspannung ausknicken können.

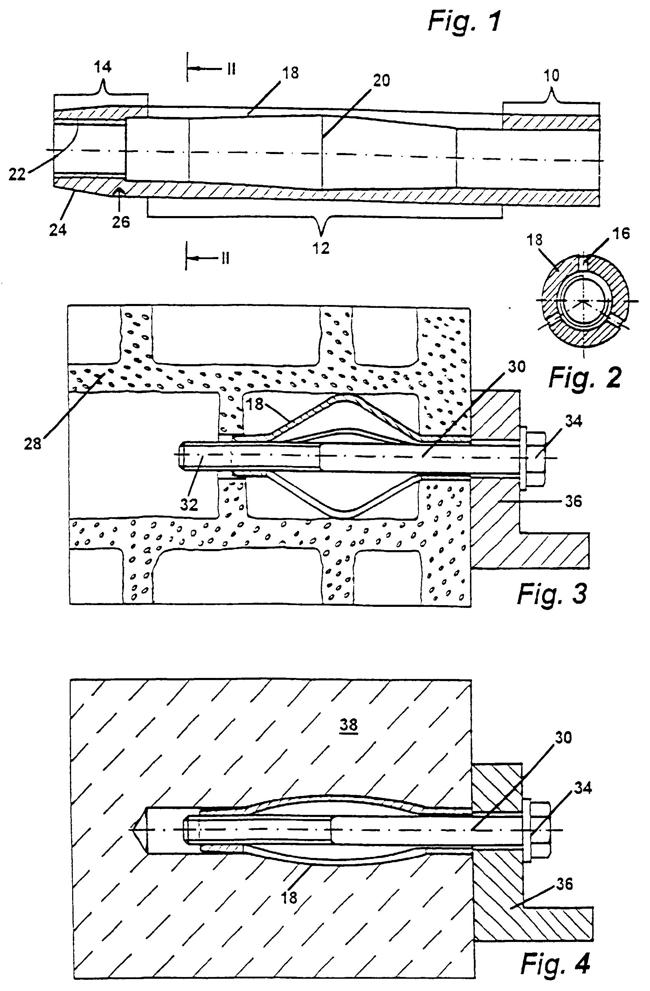

Die Fig. 3 zeigt den Einsatz des erfindungsgemäßen Dübels in einer Hohlblockwand 28. Ein Schraubbolzen 30 ist mit seinem Gewinde 32 in das Innengewinde 22 des Dübelfußes 14 eingeschraubt. Mittels des Bolzenkopfes 34 wird ein Bauelement 36 an der Wand festgelegt. Durch die axiale Verspannung zwischen Bolzenkopf und Dübelfuß erfolgt ein Ausknicken der Spreizsegmente 18 in den Hohlraum hinein, wodurch sich eine zuverlässige Festlegung im Mauerwerk ergibt.

Gemäß Fig. 4 ist der Dübel in einer massiven Wand 38 festgelegt. Auch hierbei erfolgt wiederum beim Eindrehen der Schraube in den Dübelfuß eine axiale Verspannung, wodurch die Spreizsegmente 18 radial nach außen aufgespreizt werden und sich mit dauerhaft gleichbleibender Kraft gegen die Bohrlochwandung abstützen.

Der Dübel ist in der Zeichnung lediglich schematisch dargestellt. In üblicher Weise kann der Dübelmantel ganz oder teilweise mit ringsumlaufenden Stützrippen oder in Axialrichtung oder schraubenlinienförmig verlaufenden Stützflossen versehen sein, die in der Zeichnung nicht dargestellt sind.

Gemäß dem dargestellten Ausführungsbeispiel ist das Innengewinde 22 im Dübelfuß 14 als metrisches Gewinde ausgebildet. Es ist bei entsprechender Materialwahl und Formgebung des Einsatzloches jedoch auch möglich, in diesen Dübelfuß eine Holzschraube einzuschrauben, die selbstschneidend ein Gewinde einschneidet und die erforderliche axiale Verspannung erzeugt. Auch könnte bei entsprechender Bemessung des Innendurchmessers der Schaftsegmente bereits ein Aufspreizen mittels einer eingedrehten Holzschraube erfolgen, analog der Funktion bei einem Kunststoffspreizdübel. In diesem Fall ist es jedoch zweckmäßig, eine weiche metallische Legierung zur benutzen, die ein Einschneiden des Gewindes ermöglicht.

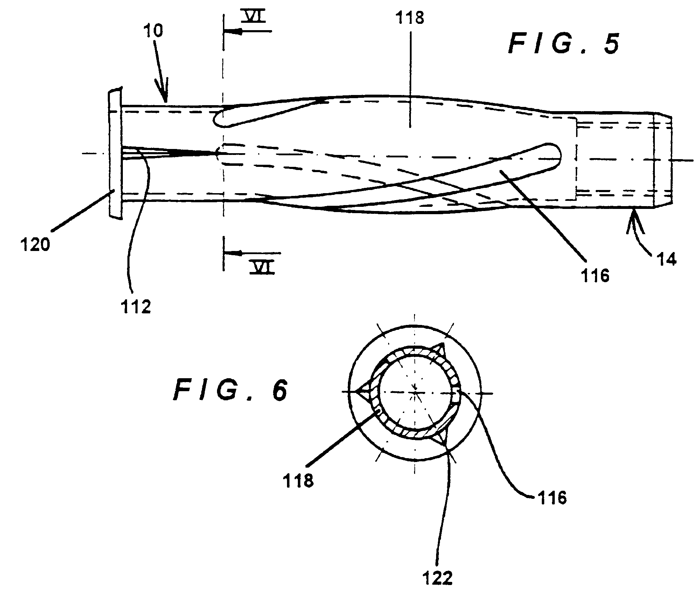

Das Ausführungsbeispiel nach Fig. 5 und 6 unterscheidet sich von dem Ausführungsbeispiel nach Fig. 1 bis 4 im wesentlichen dadurch, daß die Unterteilung des Dübelkörpers durch schraubenlinienförmig verlaufende Schlitze 116 erfolgt, zwischen denen ebenfalls schraubenlinienförmig verlaufende Dübelsegmente 118 verlaufen. Die schraubenlinienförmigen Schlitze sind bei dem üblichen rechtsgängigen Gewinde 22 im Dübelfuß 14 mit entgegengesetzter Steigung ausgebildet, wodurch eine bessere Verknotung der Dübelsegmente beim Ausknicken gewährleistet wird. Ferner ist der Dübel gemäß Fig. 5 und 6 am Dübelkopf mit einem Flansch 120 ausgestattet, und der Dübelkopf 10 trägt außen axiale Rippen 122, die vom Dübelflansch 120 in der Höhe nach dem Dübelkörper abnehmen und in die schraubenlinienförmige Schlitze 116 hinein verlaufen. Die Breite der Schlitze 116 ist etwas größer bemessen, als bei Kunststoffdübeln üblich, und gemäß einem Ausführungsbeispiel beträgt die Breite der Schlitze etwa 50 % der Breite der Dübelsegmente.

Vorzugsweise wird als Material für den Metalldübel eine Legierung der Bezeichnung R Q St 34.3 verwendet.

## Patentansprüche

1. Dübeleinheit bestehend aus einem metallischen Spreizdübel und einer Schraube (30) mit den folgenden Merkmalen:
- der Dübel ist integral aus einem Metall oder einer Metall-Legierung vorzugsweise in Kaltpreßtechnik hergestellt;
- der Dübel besteht aus einem geschlossenen, hohlzylindrischen Dübelkopf (10), aus einem Dübelkörper (12) in Form von durch Längsschlitze (16) gebildeten Spreizsegmenten (18) und aus einem massiven Dübelfuß (14) mit axialem Schraubgewinde (22) zum Einschrauben des Gewindes (32) der Schraube (30), die eine axiale Verspannung mit Ausknickung der Spreizsegmente bewirkt;
- der Innendurchmesser von Dübelkopf (10) und Dübelkörper (12) ist größer als der Schaftdurchmesser der Schraube (30);
dadurch gekennzeichnet,
- daß sich die radiale Dicke der Spreizsegmente (18) von beiden Enden des Dübelkörpers (12) nach dessen Mittelabschnitt verringert;
- daß die Spreizsegmente (18) und/oder der Dübelkopf (10) auf ihrer Außenseite radiale und/oder axiale Rippen aufweisen;
- daß der Dübelfuß (14) leicht konisch angespitzt (24) ist;
- daß sich im Übergangsbereich zwischen Dübelfuß (14) und Dübelkörper (12) eine umlaufende Schwächungsnut (26) zur Bildung von Spreizsegmentgelenken befindet.

2. Dübeleinheit nach Anspruch 1,
dadurch gekennzeichnet, daß der Dübel aus einer Stahllegierung der Bezeichnung R Q St 34.3 besteht.

3. Dübeleinheit nach Anspruch 1,
dadurch gekennzeichnet, daß der Dübel aus einer Leichtmetall-Legierung besteht.

4. Dübeleinheit nach Anspruch 2,
dadurch gekennzeichnet, daß der Dübelfuß (14) ein Maschinengewinde (22) aufweist.

5. Dübeleinheit nach einem der Ansprüche 1 bis 4,
dadurch gekennzeichnet, daß die Schraube (30) mit Maschinengewinde (32) oder mit Holzgewinde versehen ist.

6. Dübeleinheit nach Anspruch 1,
dadurch gekennzeichnet, daß der Dübelkörper mit schraubenlinienförmig verlaufenden Schlitzen (116) ausgestattet ist, zwischen denen schraubenlinienförmig verlaufende Dübelsegmente (118) verbleiben.

7. Dübeleinheit nach Anspruch 6,
dadurch gekennzeichnet, daß die Steigung der schraubenlinienförmigen Schlitze (116) bei metrischem Rechtsgewinde (22) linksgängig ausgebildet ist.

8. Dübeleinheit nach einem der Ansprüche 1 bis 7,
dadurch gekennzeichnet, daß am Dübelkopf (10) ein Flansch (120) angeformt ist.

## Claims

1. Dowel unit consisting of a metal straddling dowel and a screw (30) having the following features:
- the dowel is manufactured in one piece from a metal or a metal alloy, preferably by the cold-pressing process;
- the dowel consists of a closed, hollow cylindrical dowel head (10), a dowel body (12) in the form of straddling segments (18) formed by longitudinal slots (16), and a solid dowel foot (14) with an axial screw thread (22) for screwing in the thread (32) of the screw (30), which brings about an axial bracing with buckling of the straddling segments;
- the internal diameter of the dowel head (10) and dowel body (12) is greater than the diameter of the shank of the screw (30);
characterised in that
- the radial thickness of the straddling segments (18) decreases from both ends of the dowel body (12) to the middle section thereof;
- the straddling segments (18) and/or the dowel head (10) have radial and/or axial fins on the outside;
- the dowel foot (14) is conically tapered slightly (24);
- running all round the transition zone between the dowel foot (14) and the dowel body (12) is an attenuating groove (26) for forming straddling segment joints.

2. Dowel unit according to claim 1,
characterised in that the dowel is made from a steel alloy designated as R Q St 34.3.

3. Dowel unit according to claim 1,
characterised in that the dowel is made from a light metal alloy.

4. Dowel unit according to claim 2,
characterised in that the dowel foot (14) has a machine thread (22).

5. Dowel unit according to any one of claims 1 to 4,
characterised in that the screw (30) is provided with a machine thread (32) or with a wood thread.

6. Dowel unit according to claim 1,
characterised in that the dowel body is equipped with slits (116) which extend in a helical line and between which dowel segments (118) are left which extend in a helical line.

7. Dowel unit according to claim 6,
characterised in that the pitch of the helix-shaped slits (116) is left-handed with a metric right-handed thread (22).

8. Dowel unit according to any one of claims 1 to 7,
characterised in that a flange (120) is formed onto the dowel head (10).

## Revendications

1. Ensemble de cheville comprenant une cheville à expansion métallique et une vis (30) présentant les caractéristiques suivantes:
- la cheville est fabriquée intégralement en un métal ou en un alliage métallique, de préférence selon une technique de matriçage à froid;
- la cheville est formée d'une partie proximale (10) fermée, cylindrique creuse, d'un corps de cheville (12) sous la forme de segments expansibles (18) formés par des fentes longitudinales (16) et d'une partie extrémale (14) massive, pourvue d'un filetage axial recevant le filetage (32) de la vis (30) qui assure un serrage axial accompagné d'un flambage vers l'extérieur des segments expansibles;
- le diamètre intérieur de la partie proximale (10) et du corps de cheville (12) est supérieur au diamètre de fût de la vis (30);
caractérisé par le fait
- que l'épaisseur radiale des segments expansibles (18) décroît depuis les deux extrémités du corps de cheville (12) en direction de la partie médiane de celui-ci;
- que les segments expansibles (18) et/ou la partie proximale (10) présentent sur leur surface extérieure des nervures radiales et/ou axiales;
- que la partie extrémale (14) est légèrement effilée (24) en forme de cône;
- qu'une gorge circulaire (26) d'affaiblissement destinée à former des articulations pour les segments expansibles est prévue dans la zone de transition entre la partie extrémale (14) et le corps de cheville (12).

2. Ensemble de cheville selon la revendication 1, caractérisé par le fait que la cheville est en un alliage d'acier correspondant à la désignation R Q St 34.3.

3. Ensemble de cheville selon la revendication 1, caractérisé par le fait que la cheville est en un alliage léger métallique.

4. Ensemble de cheville selon la revendication 2, caractérisé par le fait que la partie extrémale (14) comporte un filetage mécanique (22).

5. Ensemble de cheville selon une des revendications 1 à 4, caractérisé par le fait que la vis (30) est pourvue d'un filetage mécanique (32) ou d'un filetage pour vis à bois.

6. Ensemble de cheville selon la revendication 1, caractérisé par le fait que le corps de cheville est pourvu de fentes (116) en hélice entre lesquelles s'étendent des segments de cheville (118) en hélice.

7. Ensemble de cheville selon la revendication 6, caractérisé par le fait que le pas des fentes en hélice (116), dans le cas d'un filetage à droite (22) métrique, est un pas à gauche.

8. Ensemble de cheville selon une des revendications 1 à 7, caractérisé par le fait qu'un collet (120) est formé sur la partie proximale (10).
